# EUROPEAN PATENT APPLICATION

(11) **EP 2 228 706 A2**
(43) Date of publication of application: **15.09.2010**
(21) Application number: 10002011.4
(22) Date of filing: 26.02.2010
(51) Int. Cl.: G06F 3/01

(54) **Mobile terminal and input method of mobile terminal**

(30) Priority: 12.03.2009 KR 20090021340
(71) Applicant: LG ELECTRONICS INC., Yeongdeungpo-gu Seoul 150-721 (KR)
(72) Inventor: Kwak, Woo-Young, Gyeonggi-Do (KR)
(74) Representative: Gunzelmann, Rainer

(57) **Abstract**

A mobile terminal and an inputting method of a mobile terminal are disclosed. The inputting method of a mobile terminal comprising: receiving at least one of a position and size of a virtual input region; sensing an ultrasonic wave from a pen unit in order to recognize an input of the pen unit to the input region; calculating position information of the pen unit based on the information related to the ultrasonic wave; and displaying information inputted by the pen unit on a display unit provided on a terminal body by using the position information.

## Description

### BACKGROUND OF THE INVENTION

### Field of the Invention

The present invention relates to a method for receiving a control command with respect to a mobile terminal upon sensing waves and a mobile terminal using the same.

### Description of the Related Art

Terminals may be divided into a mobile terminal (portable terminal) and a stationary terminal according to whether the terminal is portable or not. The mobile terminals may be divided into a handheld terminal that can be directly carried around and a vehicle mount terminal.

According to diversification of functions, the terminals are implemented in the form of multimedia players having complex functions such as capturing images or video, reproducing music or video files, playing games, receiving broadcasts, etc.

In order to support or increase the functions of the terminals, modifications of structural parts and/or software parts of the terminals may be taken into consideration.

Thus, a mobile terminal implementing a new input method may be taken into consideration as a new type of terminal.

### SUMMARY OF THE INVENTION

Accordingly, one object of the present invention is to provide a mobile terminal having an input method which is different from the conventional one.

Another object of the present invention is to provide a mobile terminal allowing for an inputting operation in a region out of the mobile terminal and an inputting method of the mobile terminal.

To achieve these and other advantages and in accordance with the purpose of the present invention, as embodied and broadly described herein, the present invention provides in one aspect a mobile terminal including a main body, a sensing unit and a controller. The main body may include a display unit. The sensing unit (or a detection unit) may sense (or detect) an ultrasonic wave from a pen unit at a plurality of points in order to recognize an input of the pen unit with respect to a virtual input region. The controller may receive at one of the position and size of the input region, calculate position information of the pen unit by using the time difference sensed from the plurality of points, and display information inputted by the pen unit on a display unit by using the position information.

The present invention provides in another aspect a mobile terminal including a main body, a pen unit, a sensing unit, and a controller. The main body may include a display unit. The pen unit is associated with the main body, and may be formed to be relatively movable with respect to the main body. The sensing unit may sense an ultrasonic wave from the pen unit. The controller may calculate position information of the pen unit in a virtual input region including the main body and other portions than the main body by using a sensing time difference of the ultrasonic waves, and control image information of the display unit based on the position information.

The present invention provides in still another aspect an inputting method of a mobile terminal including: a receiving step, a sensing step, a calculation step, and a displaying step. In the receiving step, at least one of the position and size of a virtual input region. In the sensing step, an ultrasonic wave from a pen unit is sensed to recognize an input of the pen unit to the input region. In calculation step, position information of the pen unit is calculated by using information related to the ultrasonic wave. In the displaying step, the information inputted by the pen unit is displayed on the display unit by using the position information.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

FIGs. 1A and 1B are conceptual views illustrating the operation of a mobile terminal according to an exemplary embodiment of the present invention;

FIG. 2 is a flow chart illustrating the process of an inputting method of a mobile terminal according to an exemplary embodiment of the present invention;

FIG. 3 is a schematic block diagram of the mobile terminal of FIG. 1A;

FIG. 4 is an exploded perspective view of the mobile terminal of FIG. 3;

FIG. 5 is a conceptual view illustrating transmission and reception of waves for detecting a motion of a pen unit;

FIGs. 6A to 6C are conceptual views illustrating the operations of the mobile terminal of FIG. 3;

FIG. 7 is a sectional view of the pen unit of FIG. 4;

FIGs. 8A and 8B are plan views illustrating another examples of a pen unit according to an exemplary embodiment of the present invention;

FIG. 9 is a plan view illustrating a mobile terminal according to another exemplary embodiment of the present invention;

FIG. 10 is a conceptual view illustrating a selection menu regarding the size of a virtual region;

FIGs. 11A to 11D are conceptual views illustrating selected virtual regions;

FIG. 12A is a conceptual view illustrating a selection menu regarding positions of virtual regions;

FIG. 12B is a conceptual view illustrating performing of inputting on overlapping input regions in a plurality of terminals;

FIG. 13 is a conceptual view illustrating an input information storing method;

FIG. 14 is a conceptual view illustrating an input information deletion function;

FIGs. 15 and 16 are conceptual views illustrating a touch input performed on a user input unit;

FIG. 17 is a perspective view of a mobile terminal according to an exemplary embodiment of the present invention;

FIGs. 18A and 18B are conceptual views illustrating the operations of the mobile terminal of FIG. 17;

FIG. 19 is a perspective view illustrating a mobile terminal according to an exemplary embodiment of the present invention;

FIGs. 20A and 20B are conceptual views illustrating the operations of the mobile terminal according to an exemplary embodiment of the present invention;

FIG. 21 is a flow chart illustrating the process of an inputting method of a mobile terminal according to an exemplary embodiment of the present invention; and

FIG. 22 is a schematic block diagram of a mobile terminal according to an exemplary embodiment of the present invention.

### DETAILED DESCRIPTION OF THE INVENTION

A mobile terminal and an inputting method of a mobile terminal according to exemplary embodiments of the present invention will now be described with reference to the accompanying drawings. For the same elements and equivalents to those shown in the figures and in the description, the same or like reference numerals are used and a corresponding detailed explanation is omitted merely for the sake of convenience. As used herein, the singular forms are intended to include the plural forms as well, unless the context clearly indicates otherwise.

In the following description, usage of suffixes such as 'module', 'part' or 'unit' used for referring to elements is given merely to facilitate explanation of the present invention, without having any significant meaning by itself.

The mobile terminal described in the present invention may include mobile phones, smart phones, notebook computers, digital broadcast receivers, PDAs (Personal Digital Assistants), PMPs (Portable Multimedia Player), navigation devices, and the like. It would be understood by a person in the art that the configuration according to the embodiments of the present invention can be also applicable to the fixed types of terminals such as digital TVs, desk top computers, or the like, except for any elements especially configured for a mobile purpose.

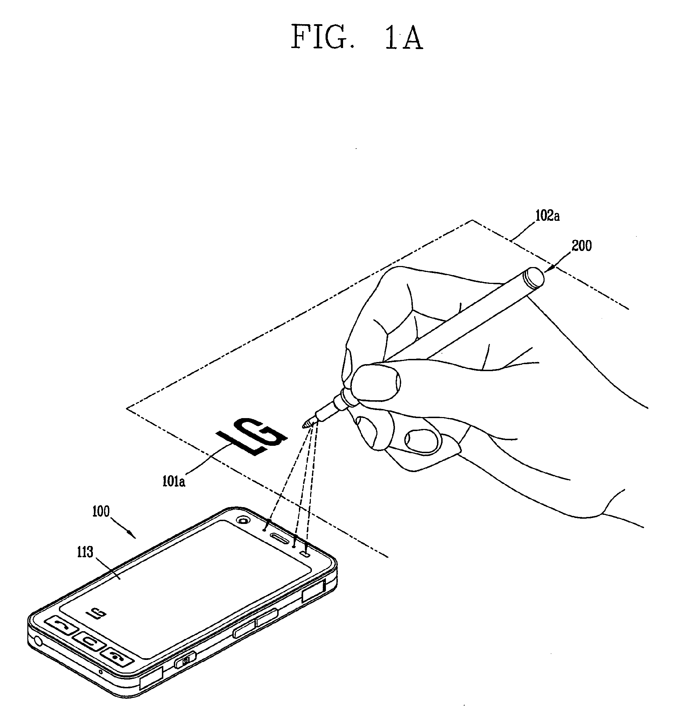

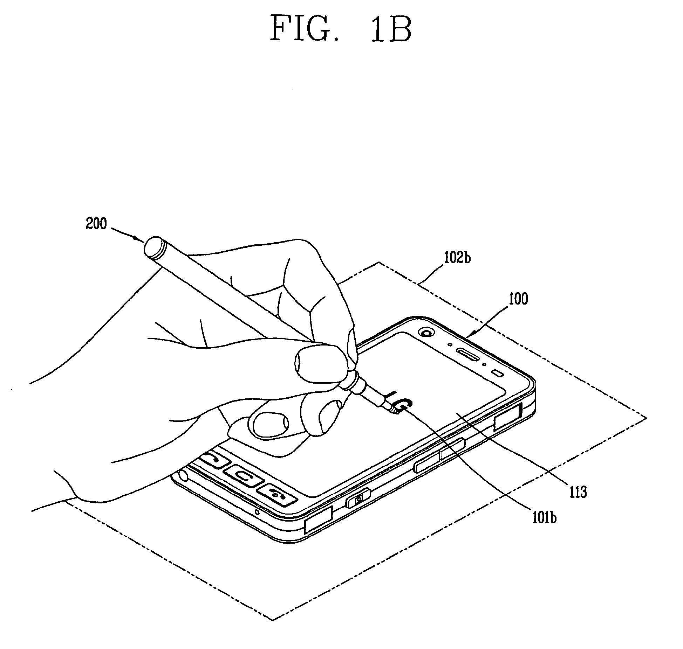

FIGs. 1A and 1B are conceptual views illustrating the operation of a mobile terminal according to an exemplary embodiment of the present invention.

With reference to FIGs. 1A and 1B, the mobile terminal 100 is configured to create information 101a and 101b desired to be inputted with a pen unit 200 by a user on a region beyond the mobile terminal 100 or on a display unit 113. Also, the mobile terminal 100 is configured to display the inputted information 101a and 101b on the display unit 113.

With reference to FIG. 1A, the mobile terminal 100 recognizes a region outside the mobile terminal 100 as if it is a touch screen. That is, the mobile terminal 100 is configured to detect an input of the pen unit 200 to a region beyond or outside the mobile terminal 100. The detection of the input is made through transmission and reception of an RF signal between the mobile terminal 100 and the pen unit 200.

The region outside the mobile terminal in which an input of the pen unit 200 is detected may form a virtual input region 102a. The input region 102a may be a pre-set region in which an input of the pen unit 20 and a control command of the mobile terminal are matched. The pre-set region may be changed by the user,

With reference to FIG. 1B, the input region 102b may be formed to include the display unit 113. Accordingly, although the display unit 113 is not configured as a touch screen, the mobile terminal 100 may receive a touch input of the pen unit 200 to the display unit 113. The input regions 101a and 101b may be formed as a plurality of regions including content disclosed in FIGs. 1A and 1B.

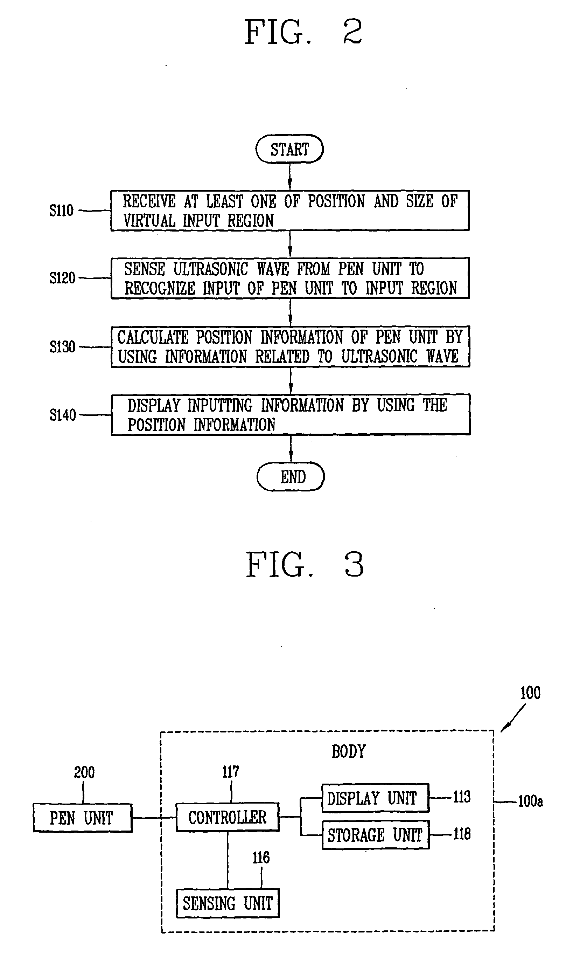

An inputting method of the mobile terminal according to an exemplary embodiment of the present invention will now be described with reference to FIG. 2. FIG. 2 is a flow chart illustrating the process of an inputting method of a mobile terminal according to an exemplary embodiment of the present invention.

First, at least one of the position and size of a virtual input region is received (S110).

The display unit may display a selection menu for selecting at least one of the position and size. For example, the selection menu may be formed to select one of the diary, A4 and post-it modes. The input region may be formed to have a size corresponding to one of the diary, A4 and the post-it modes according to a user selection.

At least one of the position and size may be formed based on two points designated by using the pen unit.

The inputting method of the mobile terminal may include setting a virtual input region formed at at least one of the terminal body having the display unit and the region beyond the terminal body.

The virtual input region may include first and second input regions. The first input region is formed to correspond to the display unit. The second input region is different from the first input region and is formed out of (beyond) the main body. For example, the second input region may have a quadrangular shape and two facing vertexes of the quadrangular shape may be the two points.

Next, an ultrasonic wave from the pen unit is detected to recognize an input of the pen unit to the input region (S120), and position information of the pen unit is calculated by using the information related to the ultrasonic wave (S130).

A wave may be an ultrasonic wave generated or reflected from the pen unit, light waves, electromagnetic waves, and the like. For example, a plurality of detection sensors are provided to the terminal body to sense an ultrasonic wave from the pen unit.

In the calculation step S130, position information of the pen unit is calculated by using the information related to the ultrasonic wave, thereby detecting a motion of the pen unit. The information related to the ultrasonic wave may be a sensing time difference of the ultrasonic waves, the strength of the ultrasonic wave, and the like. The motion of the pen unit may be generation of the ultrasonic waves, and the movement of the pen unit which is simultaneously performed while generating the ultrasonic waves.

The pen unit may be formed to generate a ultrasonic wave when a particular portion of the pen unit is touched. When the particular portion of the pen unit is touched, the controller calculates position information of the pen unit based on the difference in time when a plurality of detection sensors detect (sense) ultrasonic waves. However, the present invention is not limited thereto. For example, in the calculation step S130, the position information of the pen unit may be calculated based on the difference in strength of the ultrasonic waves sensed by the plurality of detection sensors.

When the pen unit is moved while generating ultrasonic waves, the position information of the pen unit along the movement path can be calculated.

Next, the information inputted by the pen unit is displayed on the display unit by using the position information (S140).

For example, when the pen unit touches the display unit, position information of the touched portion is calculated. Through the position information, the controller detects that the portion of the display unit has been touched through the position information, and recognizes that there is information input to the portion. The inputted information may be information regarding a control command of the terminal.

Because the display unit corresponds to the first input region, the combination of the display unit and the first input region may be a different type of touch screen from the conventional one.

The information inputted by the pen unit within the second input region may be displayed on the display unit. The input information may be formed by a path along which a tip of the pen unit moves.

The input information may be character information formed by the pen unit. The inputting of the character information may be displayed as text on the display unit. However, the present invention is not limited thereto, and an image or the like formed by the pen may be displayed on the display unit. Accordingly, the second input region may be an input region in which text, an image, or the like, is inputted.

Because second input region is formed at portions beyond the terminal body, the user may perform text inputting or the like with respect to the terminal at the portions beyond the terminal body.

The input information may be displayed with a size proportional to the display unit.

For example, the second input region and the display unit may be formed as quadrangular regions. A relative position within the display unit from one vertex of the display unit may be proportional to a relative position within the second input region from one vertex of the second input region. Accordingly, visual information created in the second input region may be scaled down at a certain ratio so as to be displayed on the display unit, and the user may perform inputting with respect to the display unit at a region wider than the display unit.

Text appearing on the display unit may be displayed by changing rows or columns (i.e., lines) based on particular relationships among sequentially inputted character information. For example, if input positions of the sequentially inputted character information are separated by a pre-set distance, the sequentially inputted character information can be displayed by changing rows or columns.

The inputting method of the mobile terminal may include storing information outputted by the terminal. Accordingly, the user can store menu, which has been created in the second input region, in the terminal.

FIG. 3 is a schematic block diagram of the mobile terminal of FIG. 1A.

A main body 100a of the mobile terminal 100 includes a display unit 113. The mobile terminal 100 may include a pen unit 200 related to the main body 100a.

The pen unit 200 may be formed to be relatively movable with respect to the main body 100a. The pen unit 200 may be configured to generate waves. Waves may be, for example, ultrasonic waves, light waves, electromagnetic waves, and the like.

The mobile terminal includes a sensing unit 116 and a controller 117.

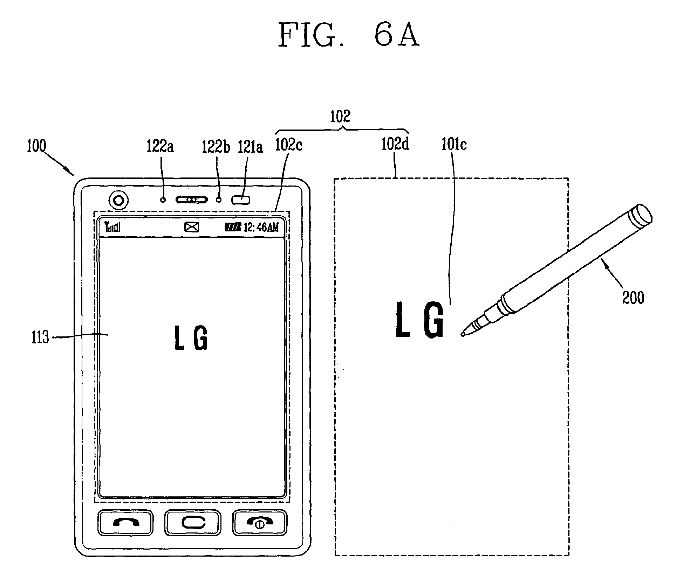

The sensing unit 116 senses (detects) a wave from the pen unit 200 in order to recognize an input of the pen unit 200 to the virtual input region 102 (See FIG. 6A). The sensing unit 116 is configured to sense an ultrasonic wave from the pen unit 200 at a plurality of points.

The controller 117 may be configured to receive at least one of the position and size of the input region 102. The input region 102 may be configured to include at least one of the terminal body 100a and the region beyond the main body 100a. The controller 117 may be configured to display a selection menu for selecting at least one of the position and size of the input region 102 on the display unit 113.

The controller 117 is configured to control image information displayed on the display unit 113 based on the position information of the pen unit 200. The controller is configured to display information inputted by the pen unit 200 on the display unit 113.

The controller 117 calculates position information of the pen unit 200 by using information related to the sensed ultrasonic waves. The information related to the detected ultrasonic waves may be a detection time difference of ultrasonic waves detected from a plurality of points.

The mobile terminal 100 may include a storage unit 118 for storing various information related to the terminal.

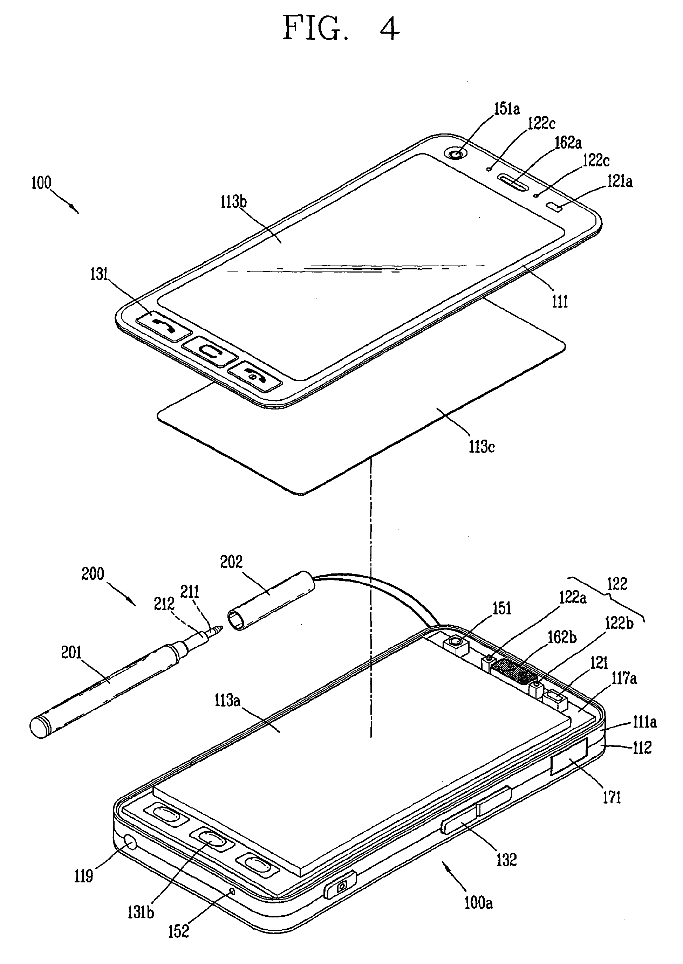

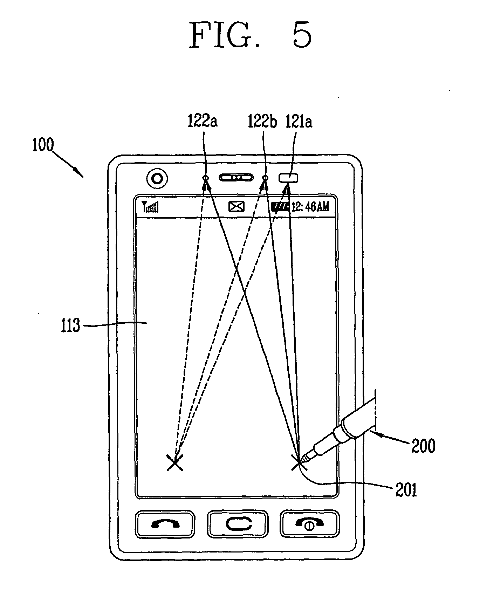

FIG. 4 is an exploded perspective view of the mobile terminal of FIG. 3, FIG. 5 is a conceptual view illustrating transmission and reception of waves for detecting a motion of a pen unit, and FIGs. 6A to 6C are conceptual views illustrating the operations of the mobile terminal of FIG. 3.

The disclosed mobile terminal 100 has a bar type terminal body. However, without being limited thereto, the present invention may be applicable to various types of mobile terminals such as a slide type mobile terminal, a folder type mobile terminal, a swing type mobile terminal, a swivel type mobile terminal, and the like, including two or more bodies that are coupled to be relatively movable.

The main body includes a case (or casing, housing, cover, etc.) constituting its external appearance. The case may be divided into a front case 111 and a rear case 112. Various electronic components are installed in the space between the front case 111 and the rear case 112. At least one intermediate case 111a may be additionally disposed between the front case 111 and the rear case 112.

The cases may be formed by injection-molding a synthetic resin or may be made of a metallic material such as stainless steel (STS) or titanium (Ti), etc.

A display unit 113, an audio output unit 162, a camera 151, a user input unit 130 (131, 132), a microphone 152, an interface 171, and the like, may be displayed on the terminal body, namely, mainly on the front case 111.

The display unit occupies most of the circumferential surface of the front case 111. The audio output unit 162 and the camera 151 are disposed on the region adjacent to one of both end portions of the display unit 113, and the first manipulation unit 131 and the microphone 152 are disposed at the region adjacent to another end portion. The second manipulation unit 132 and the interface 171 may be disposed on the sides of the intermediate case 111a and the rear case 112.

The display unit 113 is formed to output image information. The display unit 113 may display various types of visual information. These information may be displayed in the form of characters, numbers, symbols, graphic, icons, and the like.

In order to input such information, at least one of the characters, numbers, symbols, graphic, and icons are arranged to be displayed, implementing the form of a keypad. The keypad may be called a soft key. The display unit 113 may be operated as an overall region or may be divided into a plurality of regions so as to be operated. In the latter case, the plurality of regions may be configured to be operated in association with each other.

The user input unit 130 is manipulated to receive a command for controlling the operation of the mobile terminal 100. The user input unit 130 may include a plurality of manipulation units 131 and 132. The manipulation units may be generally called a manipulating portion and any types of manipulation units may be employed so long as they are operated in a tactile manner.

Content inputted by the first or second manipulation unit 131 or 132 may be variably set. For example, the first manipulation unit 131 may receive a command such as a start, end, scroll, and the like, and the second manipulation unit 132 may receive a command such as adjusting the size of a sound outputted from the audio output unit 152 or changing to a touch recognition mode of the display unit 113.

A camera may be additionally mounted on the rear surface of the terminal body, namely, on the rear case 112. A flash and a mirror may be additionally disposed adjacent to the camera. When an image of the subject is captured, the flash 220 illuminates the subject. The mirror allows the user to see himself when he wants to capture his own image (i.e., self-image capturing) by using the camera.

An audio output unit may be additionally disposed on the rear surface of the terminal body. The audio output unit may implement a stereoscopic function along with the audio output unit 162 configured on the front surface of the terminal body, and may be used for implementing a speaker phone mode during call communication.

A broadcast signal receiving antenna 119 may be disposed (externally or internally) on the side of the terminal body, in addition to an antenna that is used for mobile communications. The antenna 119 may also be configured to be retractable from the terminal body.

A power supply unit may be mounted on the terminal body in order to supply power to the mobile terminal 100. The power supply unit may be configured to be installed in the terminal body or may be directly detachably attached to the terminal body.

With reference to the drawing, a window 113b is coupled to one surface of the front case 111 such that it covers the display 113a. The window 113b is made of a material allowing light transmission, for example, a light transmissive synthetic resin, tempered glass, or the like. In this case, the window 113b may include a region preventing light transmission.

The window 113b and the display 113a may be classified as the display unit 113 (See FIG. 3). The display unit 113 displays image information through the window 113b. An audio hole 162a and an image window 151 a may be formed at one side of the front case 111. The image window 151a may be made of a material allowing light transmission.

A circuit board 117a, a speaker 162a, and the camera 151 may be mounted on the rear case 112.

The circuit board 117a may be configured as an example of the controller 117 and the storage unit 118 (See FIG. 3). As illustrated, the speaker 162b, the camera 151, the display 151 a, and the like, may be mounted on the circuit board 117a. The speaker 162b may be disposed such that it corresponds to the audio hole 152a, and the camera 151 may be disposed such that it corresponds to the image window 151a.

An optical sensor 121 and first and second ultrasonic wave sensors 122a and 122b may be mounted on the circuit board 117a. The optical sensor 121 and the first and second ultrasonic wave sensors 122a and 122b are configured as an example of the sensing unit 116 (See FIG. 3). Accordingly, the optical sensor 121 and the first and second ultrasonic wave sensors 122a and 122b may be disposed at the inner space confined by the cases 111, 111a, and 112 constituting the external appearance of the terminal.

The optical sensor 121 is formed to sense light. For example, the light may be an infrared ray, and the optical sensor 121 may be an infrared data association (IrDA) port.

The first and second ultrasonic wave sensors 122a and 122b may be formed to sense ultrasonic waves. The first and second ultrasonic wave sensors 122a and 122b may be separately disposed. Accordingly, the first and second ultrasonic wave sensors 122a and 122b may have a time difference in sensing (or detecting) ultrasonic waves generated from the same or adjacent point.

The sensing time difference and a method of calculating position information by using the sensing time difference will now be described with reference to FIG. 5.

An ultrasonic wave 222 and light 221 are generated from a wave generation source 201. The light 221 is quite faster than the ultrasonic wave 222, so a time at which the light 221 reaches the optical sensor 121 is faster than a time at which the ultrasonic wave 222 reaches the first and second ultrasonic wave sensors 122a and 122b. Thus, the position of the wave generation source 201 can be calculated by using the time difference from the time at which the ultrasonic wave 222 reaches based on the light 221 as a reference signal.

There is a difference between a time at which the ultrasonic wave 222, which has been generated from the wave generation source 201, reaches the first ultrasonic wave sensor 122a and a time at which the ultrasonic wave 222 reaches the second ultrasonic wave sensor 122b. Accordingly, when the wave generation source 201 moves, the time difference changes. Thus, position information can be calculated according to the movement path of the wave generation source 201.

With reference back to FIG. 4, the pen unit 200 includes a light generator 211 generating light and an ultrasonic wave generator 212 generating ultrasonic waves.

The pen unit 200 may be connected to the terminal body 100a. With reference to FIG. 4, the pen unit 200 includes a lid 202 to which a main body 201 is detachably coupled, and the lid 202 may be connected with the terminal body 100a by a connection line.

The first and second ultrasonic wave sensors 122a and 122b include an opening 122c on the front case 111 in order to receive waves. Ultrasonic waves reach the first and second ultrasonic wave sensors 122a and 122b through the opening 122c. Accordingly, a reception efficiency of the ultrasonic waves can be improved.

The opening 122c is formed on the surface, of the front case 111, parallel to the window 113. Accordingly, detection of the motion of the pen unit 200 moving on the window 113b can be more smoothly performed.

An optical sensor window 121a is formed on the front case 111 to allow the optical sensor 121 to receive waves. The optical sensor window 121a may be made of a material allowing light to transmit therethrough.

The optical sensor 121 and the first and second ultrasonic wave sensors 122a and 122b are disposed to be adjacent to a corner of the terminal body 100a. Accordingly, position information of the pen unit 200 can be calculated from every region of the display unit 113.

A touch detection sensor 113c may be mounted on the window 113b. The touch detection sensor 113c is configured to receive a touch input and is light-transmissive. With the touch detection sensor 113c mounted thereon, the display unit 113 constitutes a touch screen. Accordingly, the two types of input methods of the method of using the touch detection sensor 113c and the method of using wave detection can be combined. For example, the mobile terminal 110 may be configured such that the display unit 113 detects a touch input through the touch detection sensor 113c, and the region beyond the display unit 113 detects a touch input through wave detection.

The operation of the mobile terminal 100 related to the input region 102 will now be described with reference to FIG. 6A.

With reference to FIG. 6A, input information 101c is created t the input region 102 by the pen unit 200. The input information 101c may be character information such as 'LG'.

The display unit 113 displays the input information 101c. The input information 101c displayed on the display unit 113 may have a size proportional to the input information 101c created at the input region 102. With reference to FIG. 6A, the character information 'LG' created at the input region 102 is scaled down in a certain ratio so as to be displayed on the display unit 113.

The input region 102 may include first and second input regions 102c and 102d.

The first input region 102c may be formed to correspond to the display unit 113. The second input region 1002d is different from the first input region 102c and may form position information proportional to the first input region 102c. The first input region 102c may be a different type of touch screen from the conventional one, in relation to the display unit 113, and the second input region 102d may be a new input region with respect to the portions beyond the display unit 113 (including even the portions beyond the terminal body).

The character information 'LG' may be stored as digital information in the circuit board 117a (See FIG. 4). Accordingly, text created at the portions beyond the display unit 113, an image, or the like, may be stored in the mobile terminal 100.

Also, the character information 'LG' may be text inputted to a text message. Accordingly, the text message can be created through handwriting of larger text at the portions outside the display unit 113.

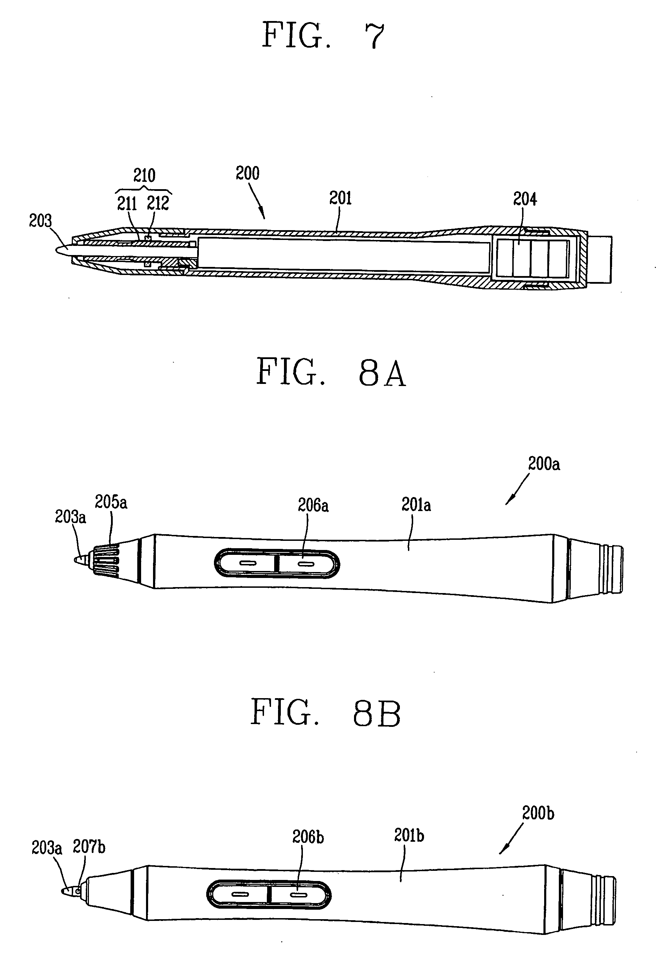

The visual information 101c may be formed along a path along which a tip 203 (See FIG. 7) moves in contact with a contact subject. The contact subject refers to a target that can be physically touched by the tip 203. For example, the contact subject may be a desk, a table, the terminal body, and the like. However, the present invention is not limited thereto. For example, the visual information 101c may be formed along a path along which the tip 203 moves in proximity to the contact subject.

The pen unit 200 may be configured to perform ink handwriting. Accordingly, when paper or the like is disposed on the second input region 102d, the visual information 101c may be visually checked.

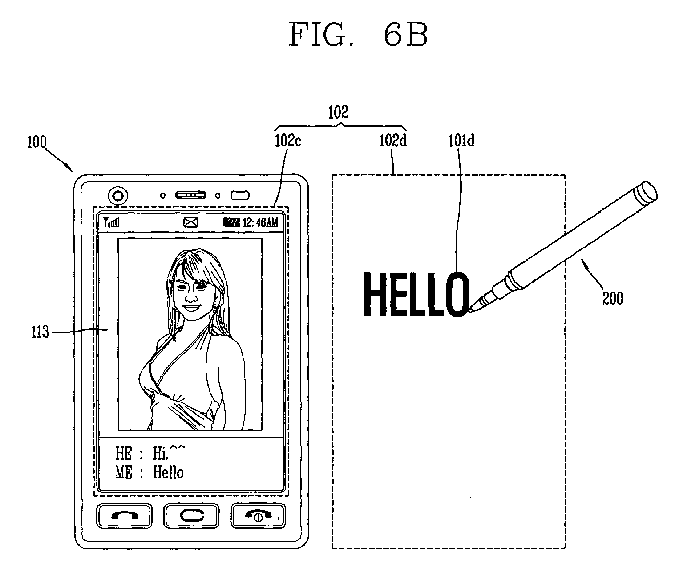

FIG. 6B is a conceptual view showing another operation related to the input region 102 of the mobile terminal of FIG. 3.

Specifically, FIG. 6B shows the operation in which the user performs video chatting while viewing an image of the counterpart through the display unit 113. The display unit 113 displays text, for example, "Hello", created at the second input region 102d, as well as the image of the counterpart.

The input information created at the second input region 102d may be transmitted through radio communication. The text created at the second input region 102d by the user may be displayed on a terminal of the counterpart. As illustrated, the display unit 113 of the terminal 100 of the user may display the text "Hello" created by the counterpart.

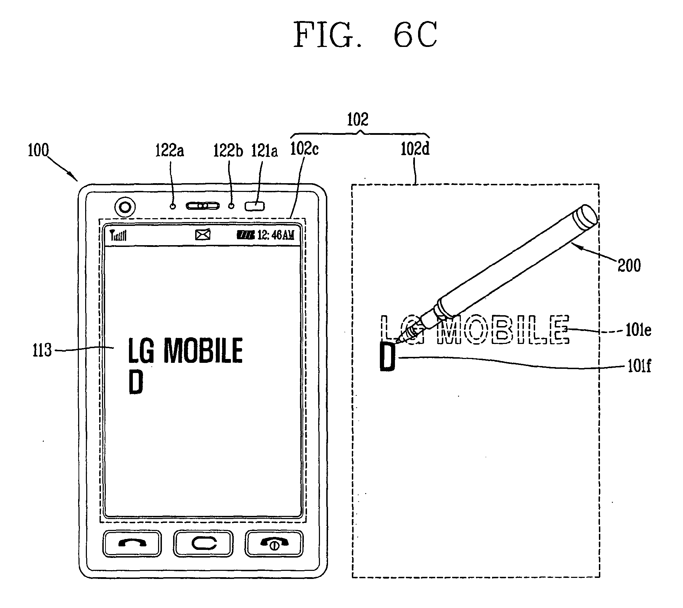

FIG. 6C is a conceptual view showing still another operation related to the input region 102 of the mobile terminal of FIG. 3.

In displaying text on the display unit 113, sequentially inputted text information 101e and 101f are displayed by changing the lines according to a particular relationship between the text information. For example, when input positions of the sequentially inputted text information 101e and 101f are separated by a pre-set distance, the sequentially inputted character information 101e and 101f are displayed by changing lines.

With reference to FIG. 6C, the character information "LG MOBILE" inputted through the pen unit 200 is displayed in a single row, and "D' is displayed in the next row. When the input positions of sequentially inputted "E" and "D" are separated by more than a pre-set size, "D" is displayed in the next row with respect to "E". Accordingly, the row changing function in inputting text can be simply implemented by the pen unit 200.

FIG. 7 is a sectional view of the pen unit of FIG. 4, and FIGs. 8A and 8B are plan views illustrating another examples of a pen unit according to an exemplary embodiment of the present invention.

With reference to FIG. 7, the pen unit 200 includes a body 201, a wave generator 210, and a tip 203.

The body 201 extends in one direction and is configured as a hollow body. A battery 204 may be installed within the body 201.

The wave generator 210 is installed within the body 201 and generates waves.

The wave generator 210 includes a light generator that generates light and an ultrasonic wave generator 212 that generates ultrasonic waves. The ultrasonic wave generator 212 may be configured as a piezoelectric element, and the light generator 211 may be configured as an infrared ray generator.

The tip 203 is disposed at one end of the body 201. The pen unit is configured such that when the tip 203 of the pen unit 200 is in contact with a contact subject, the piezoelectric element is pressurized to generate ultrasonic waves. In this case, the light generator 211 is driven together with the ultrasonic wave generator 212 to generate light.

With reference to FIG. 8A, a body 201a of a pen unit 200a includes through holes allowing ultrasonic waves to transmit therethrough. With the through holes 205a, the sensitivity of transmission and reception of ultrasonic waves can be improved.

The pen unit 200a may include an input key 206a. The input key 206a is configured to receive a command for generating waves from the wave generator 210 (See FIG. 7). Accordingly, visual information 101 created at the input region 102 can be displayed on image information in a state that the pen unit 200a is not in contact with a contact subject.

With reference to FIG. 8B, an opening 207b is formed at a tip 203b of a pen unit 200b to allow waves to transmit therethrough. As waves are radiated through the opening 207b, position information with respect to a wave generation source is closed to the position information of the tip 203b. Accordingly, the mobile terminal 100 (See FIG. 4) can detect the more accurate position of the tip 203b.

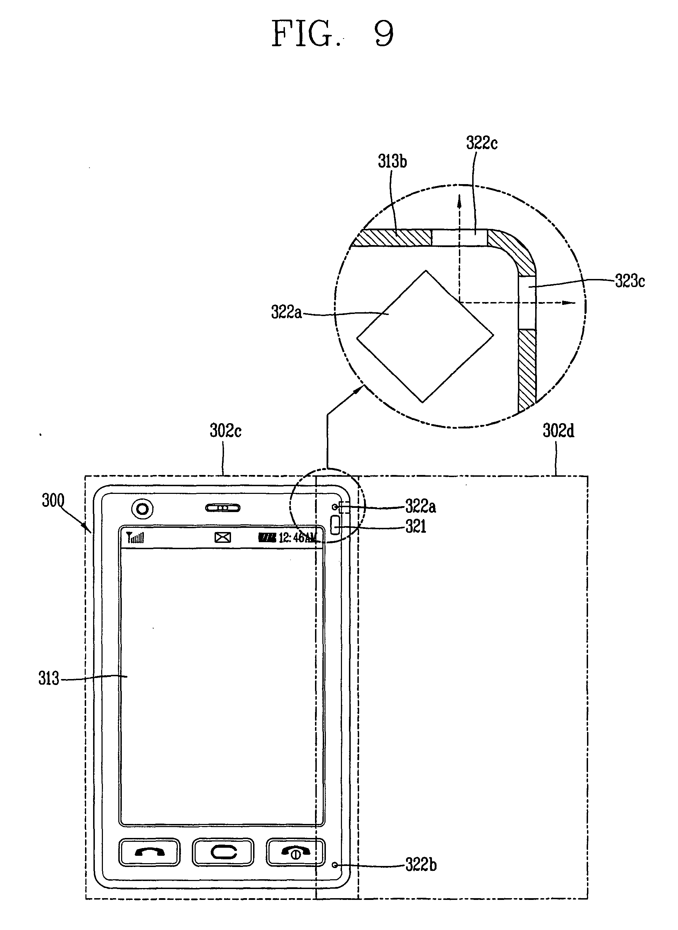

FIG. 9 is a plan view illustrating a mobile terminal according to another exemplary embodiment of the present invention.

With reference to FIG. 9, an optical sensor 321 and first and second ultrasonic wave sensors 322a and 322b are disposed in a lengthwise direction along a corner of the mobile terminal 200.. Accordingly, first and second input regions 302c and 302d are formed at left and right sides of the mobile terminal 300 based on the corner in the lengthwise direction.

The mobile terminal 300 includes an auxiliary opening 323. The auxiliary opening 323c is formed on a portion crossing a portion parallel to a window 313b. With reference to FIG. 9, the auxiliary opening 323c is formed on the portion of the mobile terminal 300 in a thicknesswise direction.

The ultrasonic wave sensor 322a is formed to be inclined to the surface parallel to the window 313b. Accordingly, the ultrasonic wave sensor 322a may be disposed to face the opening 322c and the auxiliary opening 323c, and a sensing rate of ultrasonic waves transmitted through the opening 322c and a sensing rate of ultrasonic waves transmitted through the auxiliary opening 323c can be improved. Thus, the input information of the pen unit 200 (See FIG. 4) at the first and second input regions 302c and 302d can be smoothly detected.

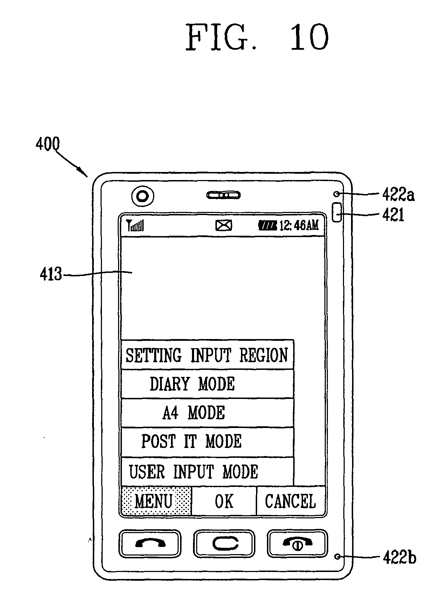

A user interface related to the present invention will now be described with reference to FIGs. 10 to 15. In FIGs. 10 to 15, the optical sensor 321 and the first and second ultrasonic wave sensors 322a and 322b are disposed in the lengthwise direction of the mobile terminal 300, but the present invention is not limited thereto.

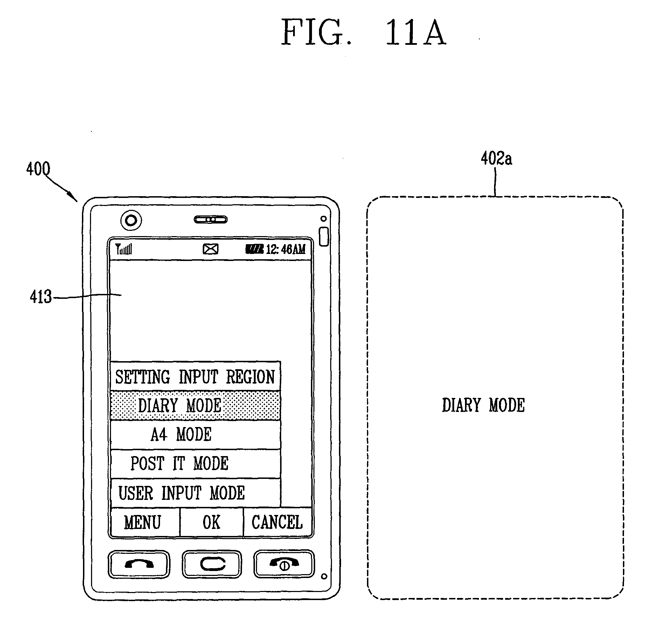

FIG. 10 is a conceptual view illustrating a selection menu regarding the size of a virtual region, and FIGs. 11A to 11D are conceptual views illustrating selected virtual regions 402a, 402b, 402c, and 402d.

With reference to FIGs. 10 and 11A to 11D, the input regions 402a, 402b, 403c, and 403d are configured such that their size is selectively set. As illustrated, a selection menu for selecting the size of the input regions 402a, 402b, 403c, and 402d can be displayed on the display unit 413. The selection menu may include, for example, selection items regarding diary, A4, post-it, and user input modes. The input regions 402a, 402b, 403c, and 402d may be formed to correspond to the diary, A4, post-it, user input modes, respectively.

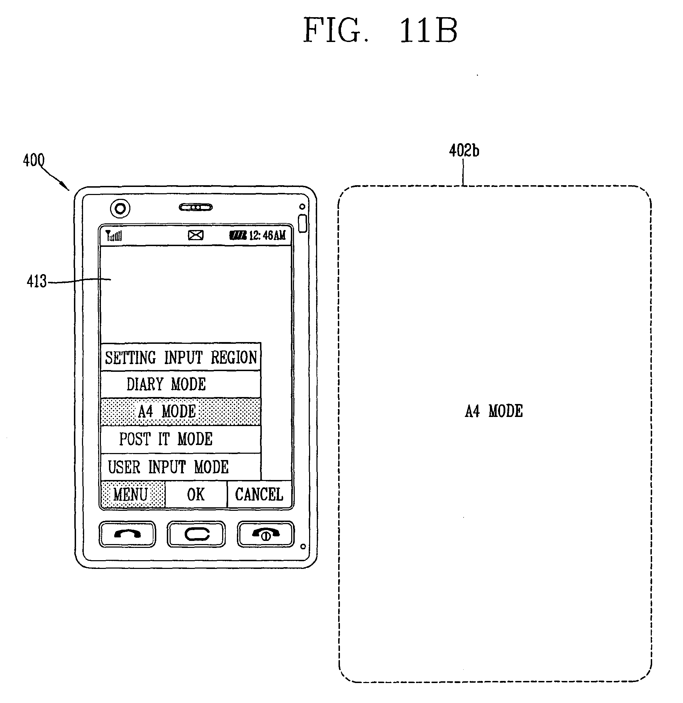

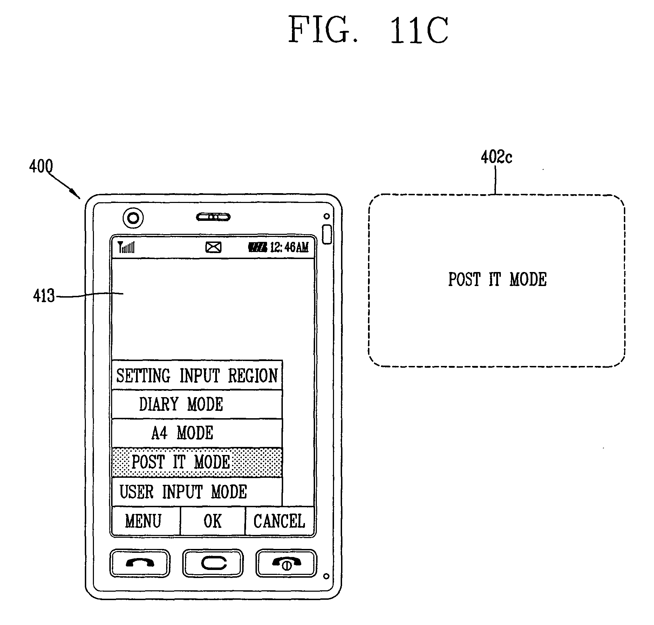

With reference to FIG. 11A, the size of the input region 402a may be similar to that of the terminal body 400 in the diary mode. With reference to FIG. 11B, the input region 402b may be similar to that of A4 in the A4 mode. With reference to FIG. 11C, the input region 402c may be smaller than the size of the terminal body 400 in the post-it mode. This can be useful for a case where a simple memo is required.

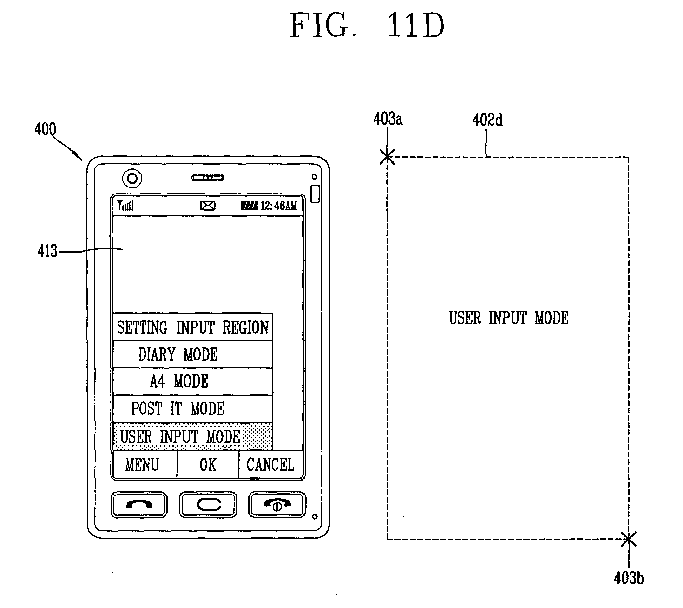

With reference to FIG. 11D, the input region 402d is formed as the user arbitrarily designates the region size in the user input mode.

For example, the input region 402d may be formed based on two points 403a and 403b designated by using the pen unit. The two points 403a and 403b may be two facing vertexes of the input region 402d formed in the rectangular shape. Accordingly, the user can arbitrarily set the size and position of the input region 402d.

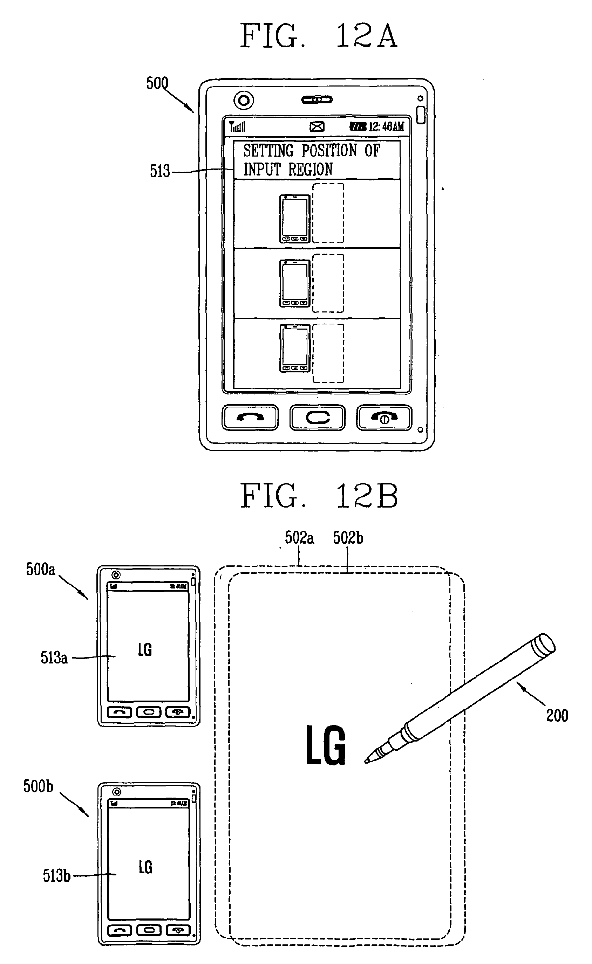

FIG. 12A is a conceptual view illustrating a selection menu regarding positions of virtual regions, and FIG. 12B is a conceptual view illustrating performing of inputting on overlapping input regions in a plurality of terminals 500a and 500b.

With reference to FIG. 12A, the position of the input regions 502a and 502b (See FIG. 12B) can be selectively set. As illustrated, a selection menu for selecting relative positions of the input regions 502a and 502b with respect to the terminal 500 can be displayed on the display unit 513.

With reference to FIG. 12B, two terminals 500a and 500b are disposed such that their input regions 502a and 502b are matched. Although the two terminals 500a and 500b are disposed at different positions, but their input regions overlap with each other. Accordingly, a single memo, an image, and the like, formed by the pen unit 200 can be simultaneously displayed on the terminals 500a and 500b and stored.

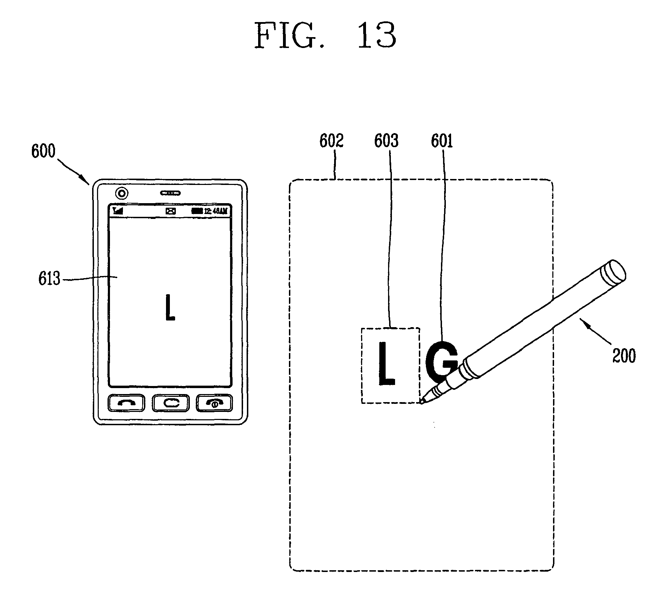

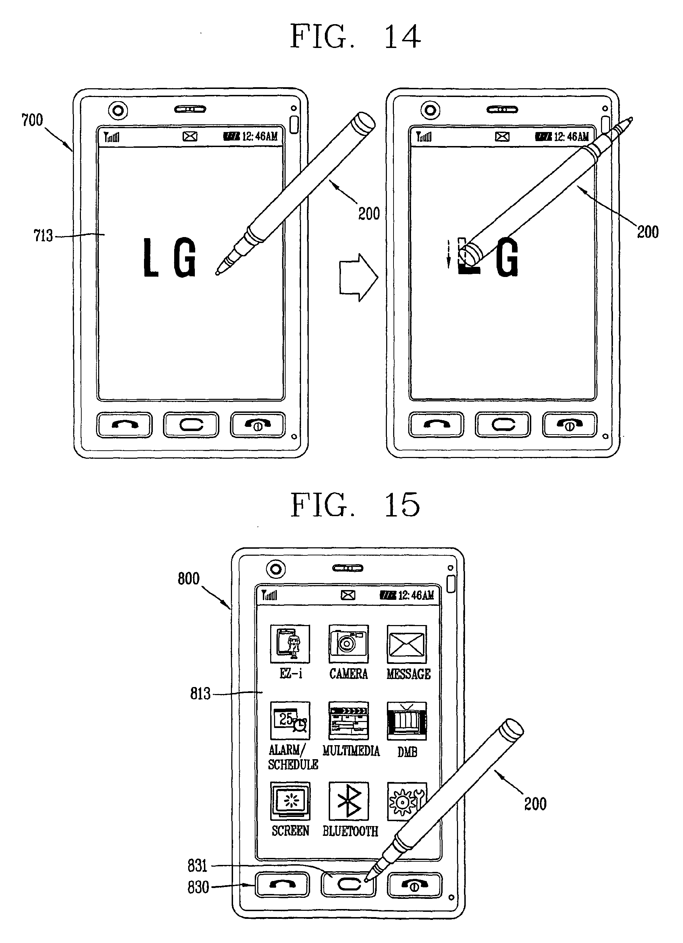

FIG. 13 is a conceptual view illustrating an input information storing method, and FIG. 14 is a conceptual view illustrating an input information deletion function.

With reference to FIG. 13, the pen unit 200 may confine already formed input information 601, for example, only a portion of "LG". The confined portion 603, for example, the portion surrounding "L", may be displayed as image information on the display unit 613. The storage unit 118 (See FIG. 3) may store "L". In this manner, the user may display or store only the desired portion.

With reference to FIG. 14, input information 701 displayed on the display unit 713 may be erased by a motion of the pen unit 200.

For example, the pen unit 200 may be configured to erase the visual information 701 by moving in the opposite side from the tip 203. The opposite side of the tip 203 may be configured to generate different types of waves having a different strength from the waves informing about the position of the tip 203, and the controller 117 (See FIG. 3) recognizes that the opposite side of the tip 203 performs the operation of erasing the visual information 701 from a signal corresponding to the different types of waves having a different strength.

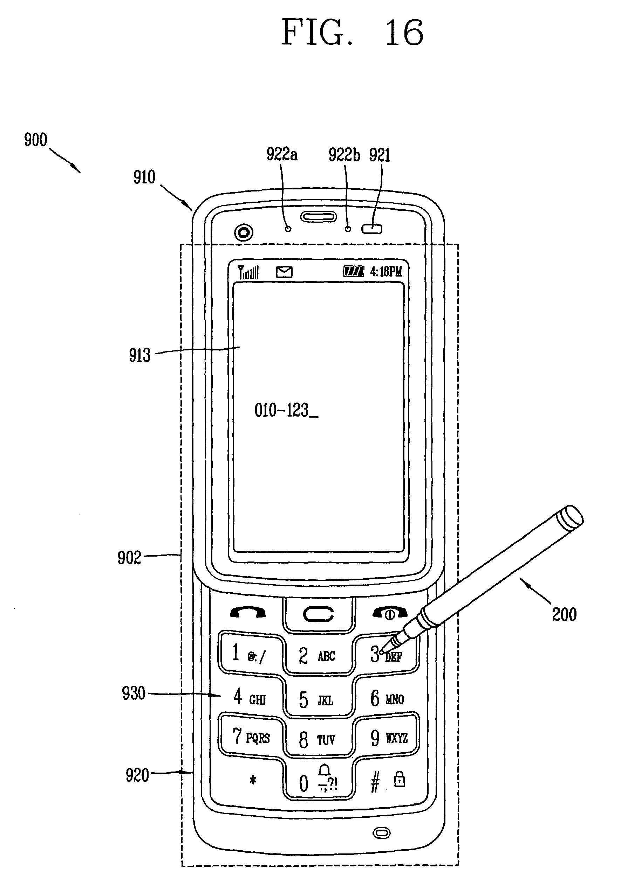

FIGs. 15 and 16 are conceptual views illustrating a touch input performed on a user input unit.

With reference to FIG. 15, a mobile terminal 800 includes a user input unit 830, for example, a first manipulation unit 831, configured to receive a control command. The first manipulation unit 831 is disposed to be separated from the display unit 813.

With reference to FIG. 15, the a speed key disposed at a middle portion of the first manipulation unit 831 is to input a pop-up command with respect to a menu. When the pen unit 200 touches the middle speed key, menus are displayed on the display unit 813.

When the pen unit 200 touches the first manipulation unit 831, the controller 117 (See FIG. 3) controls image information based on position information of the pen unit 200. Accordingly, a touch input can be performed on the user input unit 830 outside the display unit 813 by using the pen unit 200.

With reference to FIG. 16, a mobile terminal 900 includes first and second bodies 910 and 920.

The first body 910 includes a display unit 913 for displaying image information. The second body 920 is movably coupled with the first body 910 . With reference to FIG 16, the first and second bodies 910 and 920 are coupled such that they are relatively slidable, forming a slide type mobile terminal.

The second body 920 includes a user input unit 930. The user input unit 930 is configured to be open and closed by the first body 910. With reference to FIG. 16, when a key corresponding to '3' of the user input unit 930 is touched by the pen unit 200, '3' is displayed on the display unit 913.

When the pen unit 200 touches the user input unit 930, the controller 117 (See FIG. 3) controls image information based on the position information of the pen unit 200. Accordingly, a touch input using the pen unit 200 can be performed on the user input unit 930 formed at the second body 920.

As illustrated, when the user input unit 930 is open, an optical sensor 921 and first and second ultrasonic wave sensors 922a and 922b are disposed to be adjacent to an end separated from the user input unit 930, among both ends of the first body 910. Accordingly, the input unit 920 may be configured to include both the first and second bodies 910 and 920.

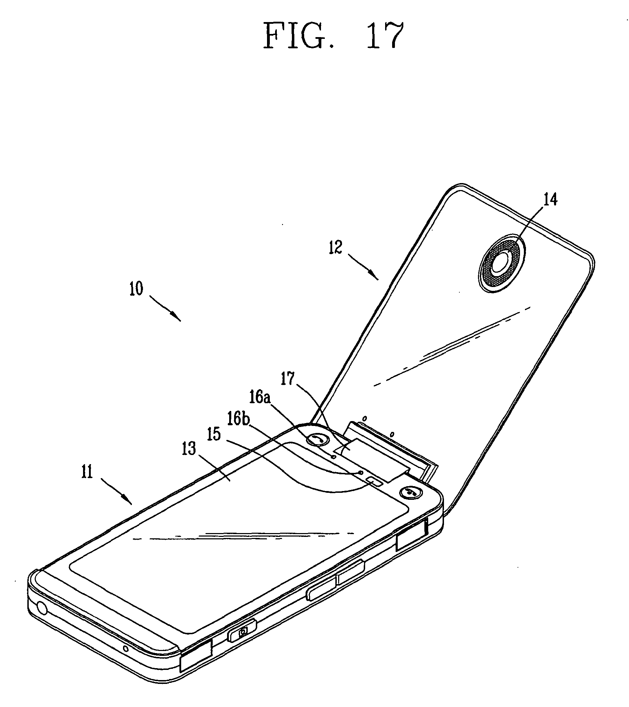

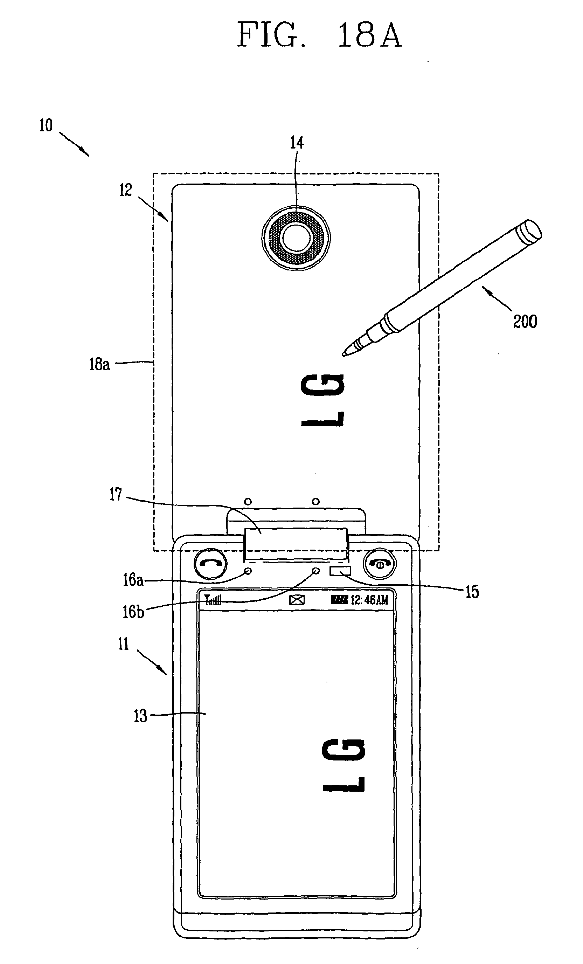

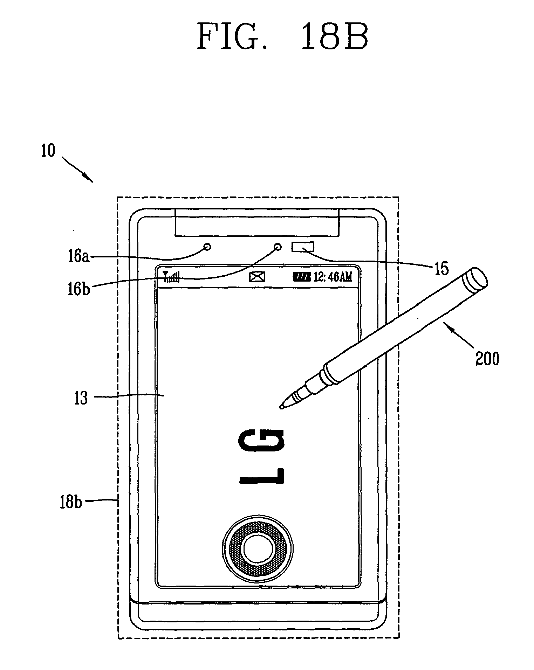

FIG. 17 is a perspective view of a mobile terminal according to an exemplary embodiment of the present invention, and FIGs. 18A and 18B are conceptual views illustrating the operations of the mobile terminal of FIG. 17.

With reference to FIG. 17, a mobile terminal 100 includes a main body 11 and a cover 12.

The main body 11 is configured to have a bar shape. A display unit 13 is disposed on one surface of the main body 11, on which image information is formed.

The cover 12 is configured to cover one surface of the main body 11. The cover 12 is rotatably coupled with one end of the main body 11 to open and close one surface of the main body 11. The cover 12 may be made of a light transmissive material, for example, a light transmissive synthetic resin. The cover 12 may include an audio output unit 14.

An optical sensor 15 and first and second ultrasonic wave sensors 16a and 16b are disposed to be adjacent to a portion where the main body 11 and the cover 12 are coupled. For example, the main body 11 and the cover 12 may be coupled by a hinge 17, and the optical sensor and the first and second ultrasonic wave sensors 16a and 16b may be disposed between the hinge 17 and the display unit 13.

The cover 12 may be configured to be matched to the input regions 18a and 18b (See FIGs. 18A and 18B). Accordingly, the cover 12 serves as an input pad when the user performs inputting on the input regions 18a and 18b.

The setting of the input regions 18a and 18b may be changed according to whether or not the cover 12 is open or closed.

As shown in FIG. 18A, when the cover opens the display unit 13, the input regions 18a is formed at the opposite side from the side where the display unit 13 is disposed based on detection sensors 15, 16a and 16b. Accordingly, visual information inputted to the cover can be displayed on the display unit 13.

As shown in FIG. 18B, when the cover covers the display unit 13, the input region 18b is formed at the side where the display unit 13 is disposed based on the detection sensors 15, 16a, and 16b. Accordingly, visual information inputted to the cover 12 can be displayed on the display unit 13. Also, even when the cover 12 is closed, a touch input to the display unit 13 can be possibly performed.

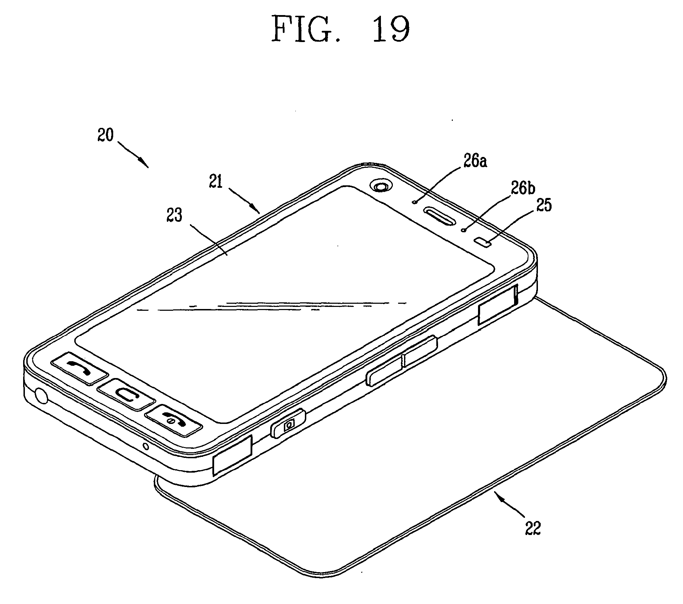

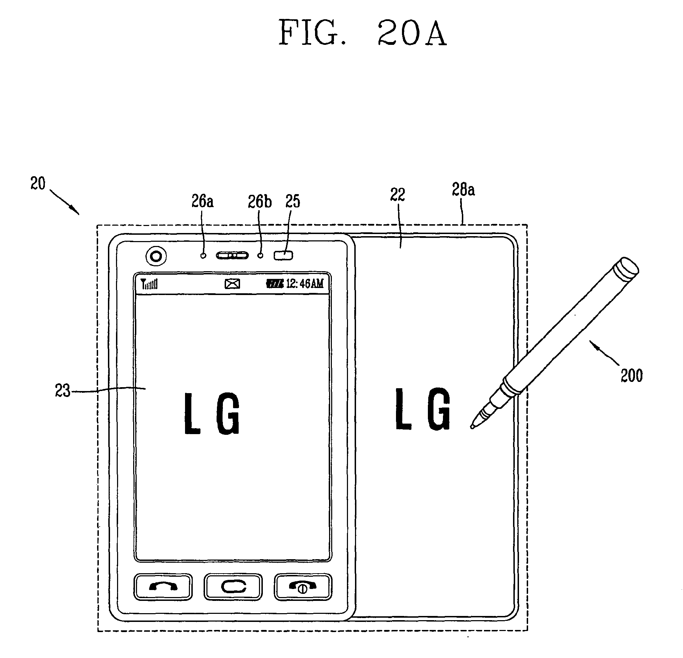

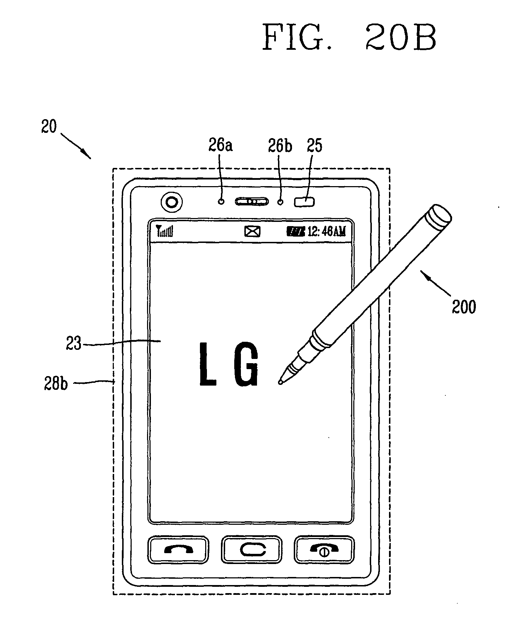

FIG. 19 is a perspective view illustrating a mobile terminal 20 according to an exemplary embodiment of the present invention, and FIGs. 20A and 20B are conceptual views illustrating the operations of the mobile terminal 20 according to an exemplary embodiment of the present invention.

With reference to FIG. 19, the mobile terminal 20 includes a first body 21 and a second body 22.

The first body 21 has a bar shape. A display unit 23 is disposed on one surface of the main body 21 in order to display image information. An optical sensor 25 and first and second ultrasonic wave sensors 26a and 26b are disposed to be adjacent to one end in a lengthwise direction of the main body 21.

The second body 22 is configured to be protracted from one side of the first body 21. The second body 22 may be disposed to be parallel to the display unit 23 according to the protraction. The second body 22 may be formed to be drawn out of the first body 21 in a state of being installed within the first body 21, or may be formed to be drawn out of the first body 21 in a state of being mounted one surface of the first body 21.

Accordingly, the second body 22 may serves as an input pad when the user performs inputting on an input region 28a.

With reference to FIGs. 20a and 20b, setting of the input regions 28a and 28b may be changed according to whether or not the second body 22 is drawn out.

When the second body 22 is drawn out of the first body 21, the input region 28a has a size including the second body 22. When the second body 22 is led into the first body 21, the input region 28b may correspond to one surface of the first body 21. For example, the controller 117 (See FIG. 3) may set the input region 28b such that it corresponds to one surface of the first body 21. The input region 28b may be controlled to be converted into an input region 28a having a size extended to the outer side of the first body 21 according to a user selection or as the second body 22 is drawn out. Thus, formation of the input regions 28a and 28b at an outer side of the first body 21 can be limited if the user desires it.

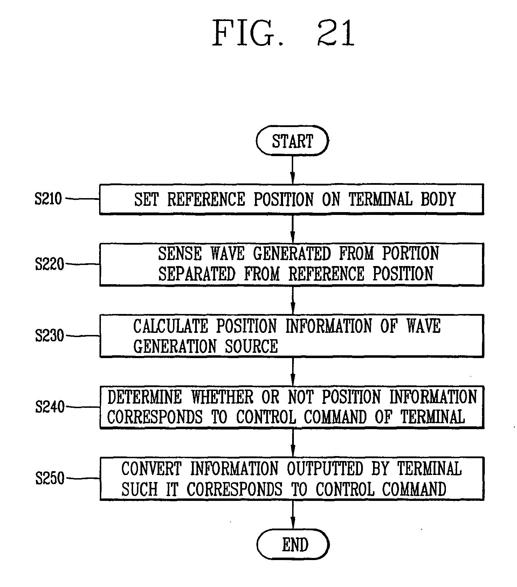

An inputting method of the mobile terminal according to an exemplary embodiment of the present invention will now be described with reference to FIG. 21. FIG. 21 is a flow chart illustrating the process of an inputting method of a mobile terminal according to an exemplary embodiment of the present invention.

First, a reference position is set in the terminal body (S210). The reference position may be a position of detection sensors for sensing waves. For example, the detection sensors may include an optical sensor and a plurality of ultrasonic wave sensors which are separately installed, and the reference position may be positions of the plurality of ultrasonic wave sensors.

Next, a wave generated from a portion separated from the reference position is sensed (S220) and position information of a wave generation source is calculated (S230). The wave generation source may be a wave generator or a wave reflector mounted at the pen unit. The wave may be an ultrasonic wave generated or reflected from the pen unit, an optical wave, an electromagnetic wave, and the like. The wave is sensed by the detection sensors.

The position information of the pen unit is calculated based on a time difference in sensing waves by the detection sensors. When the pen unit is moved while generating a wave, the position information with respect to the movement path of the pen unit can be calculated.

And then, it is determined whether or not the position information corresponds to a control command of the terminal (S240). For example, when the pen unit is separated by more than a certain distance from the reference position, it may be determined that the position information is not a control command. Also, a control command corresponding to each position is previously set, and if position information corresponds to each position, it may be determined to be information corresponding to a control command.

Information outputted by the terminal is converted such that it corresponds to the control command (S250). The information outputted by the terminal may be image information displayed on the display unit provided at the terminal body.

In step S250 of converting the outputted information, the movement path of the wave generation source is converted into information desired to be displayed by the user and displayed on the image information displayed on the display unit. For example, when the control command is a text input, the text is displayed on the image information formed on the display unit of the terminal. The text displayed on the display unit may have a size proportional to the movement path of the wave generation source.

Finally, the inputting method of the mobile terminal may include storing of the visual information.

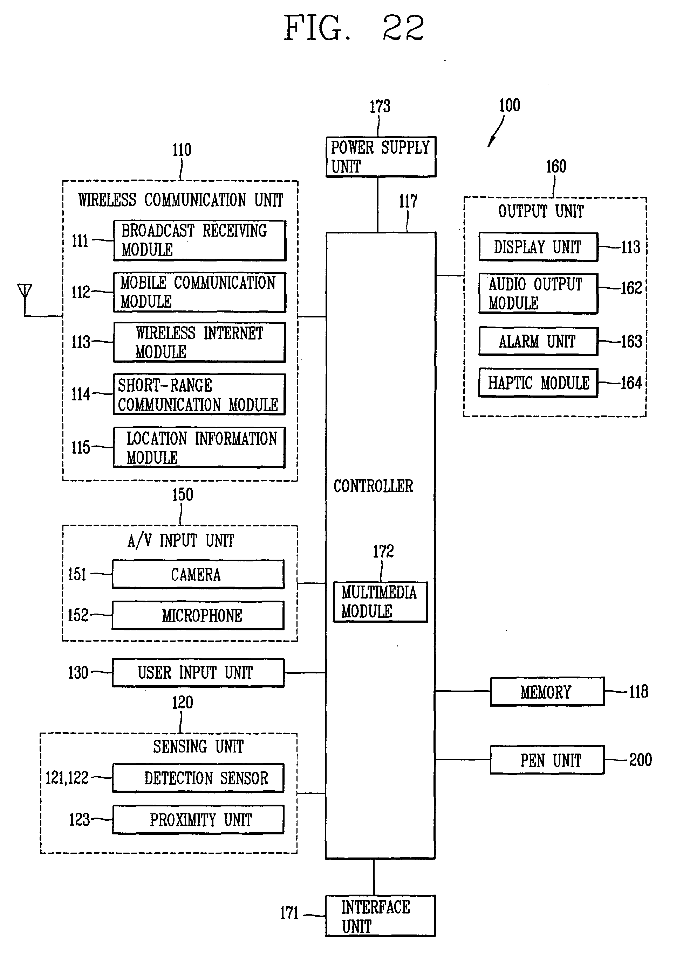

FIG. 22 is a schematic block diagram of a mobile terminal according to an exemplary embodiment of the present invention.

The mobile terminal 100 may include a wireless communication unit 140, an A/V (Audio/Video) input unit 150, a user input unit 130, a sensing unit 120, an output unit 160, a memory 118, an interface unit 171, a controller 117, and a power supply unit 173, etc. FIG. 1 shows the mobile terminal as having various components, but it should be understood that implementing all of the illustrated components is not a requirement. Greater or fewer components may alternatively be implemented.

The elements of the mobile terminal will be described in detail as follows.

The wireless communication unit 140 typically includes one or more components allowing radio communication between the mobile terminal 100 and a wireless communication system or a network in which the mobile terminal is located. For example, the wireless communication unit may include at least one of a broadcast receiving module 141, a mobile communication module 142, a wireless Internet module 143, a short-range communication module 144, and a location information module 145.

The broadcast receiving module 141 receives broadcast signals and/or broadcast associated information from an external broadcast management server (or other network entity) via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal. The broadcast associated information may refer to information associated with a broadcast channel, a broadcast program or a broadcast service provider. The broadcast associated information may also be provided via a mobile communication network and, in this case, the broadcast associated information may be received by the mobile communication module 142.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 141 may be configured to receive signals broadcast by using various types of broadcast systems. In particular, the broadcast receiving module 141 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 141 may be configured to be suitable for every broadcast system that provides a broadcast signal as well as the above-mentioned digital broadcast systems.

Broadcast signals and/or broadcast-associated information received via the broadcast receiving module 141 may be stored in the memory 118 (or anther type of storage medium).

The mobile communication module 142 transmits and/or receives radio signals to and/or from at least one of a base station (e.g., access point, Node B, etc.), an external terminal (e.g., other user devices) and a server (or other network entities). Such radio signals may include a voice call signal, a video call signal or various types of data according to text and/or multimedia message transmission and/or reception. The wireless Internet module 143 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 144 refers to a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 145 is a module for checking or acquiring a location (or position) of the mobile terminal. A typical example of the location information module is a GPS (Global Positioning System) module.

With reference to FIG. 22, the A/V input unit 150 is configured to receive an audio or video signal. The A/V input unit 150 may include a camera 151 (or other image capture device) and a microphone 152 (or other sound pick-up device). The camera 151 processes image data of still pictures or video obtained by an image capture device in a video capturing mode or an image capturing mode. The processed image frames may be displayed on a display unit 113 (or other visual output device).

The image frames processed by the camera 151 may be stored in the memory 118 (or other storage medium) or transmitted via the wireless communication unit 140. Two or more cameras 151 may be provided according to the configuration of the mobile terminal.

The microphone 152 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 142 in case of the phone call mode. The microphone 152 may implement various types of noise canceling (or suppression) algorithms to cancel (or suppress) noise or interference generated in the course of receiving and transmitting audio signals.

The user input unit 130 (or other user input device) may generate input data from commands entered by a user to control various operations of the mobile terminal. The user input unit 130 may include a keypad, a dome switch, a touch pad (e.g., a touch sensitive member that detects changes in resistance, pressure, capacitance, etc. due to being contacted) a jog wheel, a jog switch, and the like. The sensing unit 120 (or other detection means) detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 120 may sense whether the slide phone is opened or closed. In addition, the sensing unit 120 can detect whether or not the power supply unit 173 supplies power or whether or not the interface unit 171 is coupled with an external device. The sensing unit 120 may include a proximity sensor 123. The sensing unit 120 may include detection sensors 121 and 122. The detection sensors 121 and 122 may sense optical waves and ultrasonic waves.

The output unit 160 is configured to provide outputs in a visual, audible, and/or tactile manner (e.g., audio signal, video signal, alarm signal, vibration signal, etc.). The output unit 160 may include the display unit 113, an audio output module 162, an alarm unit 163, a haptic module 164, and the like.

The display unit 113 may display (output) information processed in the mobile terminal 100. For example, when the mobile terminal 100 is in a phone call mode, the display unit 113 may display a User Interface (UI) or a Graphic User Interface (GUI) associated with a call or other communication (such as text messaging, multimedia file downloading, etc.). When the mobile terminal 100 is in a video call mode or image capturing mode, the display unit 113 may display a captured image and/or received image, a UI or GUI that shows videos or images and functions related thereto, and the like.

The display unit 113 may include at least one of a Liquid Crystal Display (LCD), a Thin Film Transistor-LCD (TFT-LCD), an Organic Light Emitting Diode (OLED) display, a flexible display, a three-dimensional (3D) display, or the like.

Some of them may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 113 of the terminal body.

The mobile terminal 100 may include two or more display units (or other display means) according to its particular desired embodiment. For example, a plurality of display units may be separately or integrally disposed on one surface of the mobile terminal, or may be separately disposed on mutually different surfaces. Meanwhile, when the display unit 113 and a detection sensor (referred to as a 'touch detection sensor', hereinafter) for detecting a touch operation are overlaid in a layered manner (referred to as a 'first touch screen', hereinafter), the display unit 113 may function as both an input device and an output device. The touch detection sensor may have a form of a touch film, a touch sheet, a touch pad, and the like.

The touch detection sensor may be configured to convert pressure applied to a particular portion of the display unit 113 or a change in the capacitance or the like generated at a particular portion of the display unit 113 into an electrical input signal. The touch detection sensor may be configured to detect the pressure when a touch is applied, as well as the touched position and area. When there is a touch input with respect to the touch detection sensor, a corresponding signal (signals) are transmitted to a touch controller. The touch controller processes the signals and transmits corresponding data to the controller 117. Accordingly, the controller 117 may recognize which portion of the display unit 113 has been touched.

With reference to FIG. 22, a proximity sensor 123 may be disposed within or near the touch screen. The proximity sensor 123 is a detection sensor for detecting the presence or absence of an object relative to a certain detection surface or an object that exists nearby by using the force of electromagnetism or infrared rays without a physical contact. Thus, the proximity sensor 123 has a considerably longer life span compared with a contact type detection sensor, and it can be utilized for various purposes. Examples of the proximity sensor 123 may include a transmission type photoelectric detection sensor, a direct reflection type photoelectric detection sensor, a mirror-reflection type photo detection sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch detection sensor) may be classified as a proximity sensor.

In the following description, for the sake of brevity, recognition of the pointer positioned to be close to the touch screen will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

By employing the proximity sensor 123, a proximity touch and a proximity touch pattern (e.g., a proximity touch distance, a proximity touch speed, a proximity touch time, a proximity touch position, a proximity touch movement state, or the like) can be detected, and information corresponding to the detected proximity touch operation and the proximity touch pattern can be outputted to the first touch screen.

When the display unit 113 and the detection sensors 121 and 122 for sensing light waves and ultrasonic waves are combined (referred to as 'a second touch screen', hereinafter), the display unit 113 may be also used as an input device as well as as an output device. When there is a touch input to the display unit 113, a corresponding light wave and ultrasonic wave signal(s) are transmitted to a wave detection controller. The wave detection controller processes the signal(s) into position information and then transmits corresponding data to the controller 117. Accordingly, the controller 117 can detect whether or not the display unit has been touched or a touched region of the display unit 113.

The audio output module 162 may convert and output as sound audio data received from the wireless communication unit 140 or stored in the memory 118 in a call signal reception mode, a call mode, a record mode, a voice recognition mode, a broadcast reception mode, and the like. Also, the audio output module 162 may provide audible outputs related to a particular function performed by the mobile terminal 100 (e.g., a call signal reception sound, a message reception sound, etc.). The audio output module 162 may include a speaker, a buzzer, or other sound generating device.

The alarm unit 163 (or other type of user notification means) may provide outputs to inform about the occurrence of an event of the mobile terminal 100. Typical events may include call reception, message reception, key signal inputs, a touch input etc. In addition to audio or video outputs, the alarm unit 163 may provide outputs in a different manner to inform about the occurrence of an event. The video signal or audio signal may be also outputted through the display unit 113 or through the audio output module 162. Thus, the display unit 113 and the audio output module 162 may be classified as a portion of the alarm unit 163.

A haptic module 164 generates various tactile effects the user may feel. A typical example of the tactile effects generated by the haptic module 164 is vibration. The strength and pattern of the haptic module 164 can be controlled. For example, different vibrations may be combined to be outputted or sequentially outputted.

Besides vibration, the haptic module 164 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat. The haptic module 164 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 118 may store software programs used for the processing and controlling operations performed by the controller 117, or may temporarily store data (e.g., a phonebook, messages, still images, video, etc.) that are inputted or outputted. In addition, the memory 118 may store data regarding various patterns of vibrations and audio signals outputted when a touch is inputted to the touch screen.

The memory 118 may store data corresponding to position information of the pen unit 200.

The memory 118 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 118 over the Internet.

The interface unit 171 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 171 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 171 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 117 typically controls the general operations of the mobile terminal. For example, the controller 117 performs controlling and processing associated with voice calls, data communications, video calls, and the like. The controller 117 may include a multimedia module 172 for reproducing multimedia data. The multimedia module 172 may be configured within the controller 117 or may be configured to be separated from the controller 117.

The controller 117 may perform a pattern recognition processing to recognize a handwriting input or a picture drawing input performed on the touch screen as characters or images, respectively.

The power supply unit 173 receives external power or internal power and supplies appropriate power required for operating respective elements and components under the control of the controller 117.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 117 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 118 and executed by the controller 117.

The mobile terminal 100 includes the pen unit 200. The pen unit 200 is formed to generate waves. The light waves and ultrasonic waves generated by the pen unit 200 may be sensed by the detection sensors 121 and 122.

The mobile terminal and the inputting method of the mobile terminal according to at least one exemplary embodiment of the present invention can implement a different type of touch input from that of the related art.

According to the exemplary embodiment of the present invention, because inputting is controlled through a motion detection, a response speed and accuracy of a touch input can be improved. Also, the use of the ultrasonic waves reduces the fabrication cost of the mobile terminal.

In addition, because an input region is formed, a control command of the terminal can be inputted from a region separated from the main body of the terminal. Accordingly, text, an image, and the like, can be inputted from a region separated from the main body of the terminal. Also, because the input information is displayed with a size proportional to the display unit, the user can perform handwriting or drawing such that it is larger than content displayed on the display unit. It can, thus, implement a mobile note in which text, an image, and the like, is stored as an electronic file.

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. An inputting method of a mobile terminal, the method comprising:
receiving at least one of a position and size of a virtual input region;
sensing an ultrasonic wave from a pen unit;
calculating position information of the pen unit based on information related to the ultrasonic wave; and
displaying information inputted by the pen unit on a display unit provided on a terminal body of the mobile terminal by using the calculated position information.

2. The method of claim 1, further comprising:
displaying on the display unit a selection menu for selecting at least one of the position and size of the virtual input region.

3. The method of claim 1 or 2, wherein said at least one of the position and size of the input region is determined based on two points designated by the pen unit.

4. The method of any one of claims 1 to 3, wherein the step of displaying information inputted by the pen unit comprises:
displaying text or character information inputted by the pen unit.

5. A mobile terminal, comprising:
a main body (111, 112, 11) having a display unit (113, 13) ;
a sensing unit (120) configured to sense an ultrasonic wave from a pen unit (200) at a plurality of points in a virtual input region (102, 102a, 102b); and
a controller (117) configured to
receive at least one of a position and a size of the virtual input region;
calculate position information of the pen unit based on information related to the ultrasonic wave; and
display information inputted by the pen unit on the display unit by using the calculated position information.

6. The mobile terminal of claim 5, wherein said at least one of the position and size of the input region (102, 102a, 102b) is determined based on two points designated by the pen unit (200).

7. The mobile terminal of claim 5 or 6, wherein the virtual input region (102, 102a, 102b) is formed outside the main body (111, 112), and
wherein the display unit (113) includes a second input region (102c, 102d).

8. The mobile terminal of any one of claims 5 to 7, wherein the controller (117) is configured to display on the display unit a selection menu for selecting said at least one of the position and size of the virtual input region (102, 102a, 102b, 102c, 102d).

9. The mobile terminal of any one of claims 5 to 7, wherein the controller (117) is configured to display text or character information inputted by the pen unit (200).

10. The mobile terminal of any one of claims 5 to 7, wherein the controller (117) is configured to display the information with a size proportional to a size of the display unit (113).

11. The mobile terminal of claim any one of claims 5 to 7, wherein the controller (117) is configured to display text or character information in rows or columns corresponding to information sequentially input by the pen unit and separated by a pre-set distance.

12. The mobile terminal of claim any one of claims 5 to 11, wherein the display unit (113) is configured to display information inputted through a window (113b) of the display unit,
wherein the sensing unit (120) is disposed in an internal space confined by a case of the main body, and
wherein an opening is formed on a face parallel to the window in order to allow the sensing unit to receive the ultrasonic wave from the pen unit therethrough.

13. The mobile terminal of claim 12, wherein an auxiliary opening (323c) is formed on another face crossing the face parallel to the window.

14. The mobile terminal of any one of claims 5 to 11, wherein the sensing unit (120) is disposed in a position adjacent to a corner of the main body.

15. The mobile terminal of any one of claims 5 to 11, further comprising:
a cover (12) rotatably coupled to one end of the main body (11),
wherein the inputted information is formed on one surface of the terminal body.
